# EUROPEAN PATENT APPLICATION

(11) **EP 2 701 090 A1**
(43) Date of publication of application: **26.02.2014**
(21) Application number: 12181430.5
(22) Date of filing: 22.08.2012
(51) Int. Cl.: G06F 21/00, H04N 1/00, B29C 67/00

(54) **Method and system for enforcing 3D restricted rights in a rapid manufacturing and prototyping environment**

(71) Applicant: Aahlstö OÜ, 10116 Tallinn (EE)
(72) Inventor: Isbjörnssund, Kimmo, 10116 Tallinn (EE)
(74) Representative: Koppel, Mart Enn

(57) **Abstract**

The invention solves in practice the serious threat of piracy and unauthorized reproduction of 3D objects protected by intellectual property rights without the consent of right holders. The invention also prevents unauthorized 3D reproducing or restricted or dangerous items on 3D printers such as weapons, parts of weapons and similar. Right holders and authorities can upload restricted items into the database and their reproduction will be allowed only with proper authorisation or a license. This enforces the law in practice by limiting illegal distribution, not just on paper.

## Description

### Technical Field

The present invention relates to electronic devices, such as rapid manufacturing devices and systems, either by additive or subtractive methods, including 3D printing devices, with intellectual property rights enforcement features or with features to enforce other type of use restrictions.

### Background Art

Rapid manufacturing and rapid prototyping are relatively new class of technologies that can automatically construct physical 3D models from Computer-Aided Design (CAD) data. Usually these methods make use of additive manufacturing technologies, including 3D printers.

3D printing or additive manufacturing (AM) is a process of joining materials to make objects from 3D model data, usually layer upon layer, as opposed to subtractive manufacturing methodologies, such as traditional machining. Several technologies are available for industrial uses, including for rapid prototyping and rapid manufacturing but increasingly also for domestic and hobbyist uses. 3D printing is rapidly becoming as widespread as traditional 2D printing has become long ago.

Combining 3D printing with 3D scanning also makes possible 3D copying, i.e., a process where first a 3D digital model of an object is made by 3D scanning of the object and then a 3D copy of the 3D object is made by 3D reproducing similarly to the process of digital 2D copying.

It is well known that 2D printing and copying can be used to make copies of copyrighted materials or other materials protected by other intellectual property rights. While some technologies exist to inhibit copying, e.g., documents with security features such as watermarks, holograms, straps, UV or IR glowing, etc; however, no universal technology exists to control reproducing and copying of copyrighted materials or other protected materials.

The same challenges are maybe even more important in 3D printing and copying. For example, 3D objects can be protected by number of intellectual property rights, including copyright (e.g., as sculptures, figurines, architectural objects, etc), industrial design (known in the US as design patent; e.g., a new shape of a product such as vase or chair), 3D trademark or even by a patent (invention patent in the US) or a utility model. While certain fair use provisions may exist in copyright law (or analogous provisions for design patent or invention patent) allowing in some cases making copies for non-commercial private use, making copies of such 3D objects protected by intellectual property rights is prohibited without a prior explicit permission (a license) from the right holder.

Also, no universal technologies exist allowing right holders to make their IPR protected materials available for 3D reproducing against payment of fee.

What is needed, therefore, is a method for managing and controlling, including enforcing intellectual property rights and other restrictions in a rapid manufacturing and prototyping environment. Also needed is a 3D reproducing system with intellectual property rights management feature.

### Summary of invention

One aspect of the invention is a method for enforcing 3D intellectual property rights in a rapid manufacturing and prototyping environment for manufacturing 3D objects, the method comprising the steps of: receiving by a computer system an inquiry whether a mechanical reproduction of a 3D object or of at least one part of said 3D object is restricted by law or by third person's rights, wherein said 3D object is presented as an electronic file accessible in a computer system; determining by the computer system from a 3D restricted rights database whether any restrictions exist for the mechanical reproduction of said 3D object or at least one part of said 3D object; and
sending a response by a computer to said inquiry, said response comprising information on said restrictions or information that no restrictions exist in 3D restricted rights database.

The 3D restricted rights database comprises a database of 3D intellectual property rights. The restricted rights database may also comprise a database of 3D items, the mechanical reproduction of which is prohibited or restricted by law, for example, weapons, firearms or their parts, explosives, etc., or restricted by other types of rights, e.g., privacy rights such as personality rights, rights to personal image (likeness) or contractual rights (e.g., terms of use of a 3D model database).

According to one embodiment, the inquiry is a request from an end user to reproduce a 3D object by using rapid manufacturing or prototyping tools connected directly or over a computer network to the computer system, from an electronic file of the 3D object. The method comprises the computer system determining if said 3D object or at least one of its parts is included in said 3D restricted rights database. Said determining can be accomplished by comparing said 3D object, the electronic file of said 3D object, or a unique identification code of the 3D object stored directly in said 3D object or attached to the electronic file of said 3D object, with corresponding records of the 3D restricted rights database. The method further comprises the step of said computer system retrieving such restriction information from said 3D restriction database; and then the computer system taking an affirmative action based on such restriction information. Such affirmative action may be one or more actions, including sending a notice to the user that the 3D object is protected, e.g., by intellectual property rights, sending a warning to the user that reproduction of the 3D object is illegal, prohibited or restricted; stopping the tools from reproducing the 3D object; stopping the computer system from copying, alternating, moving, removing or streaming of the 3D object and its electronic file; or offering the user a license for fee or for free.

According to one embodiment, the method comprises offering the user a license or permission to reproduce the 3D object, receiving an acceptance from the user of the terms of the offer and delivering said 3D object to a rapid manufacturing or prototyping tool over a secure channel. Such method may comprise receiving a payment from the user by any known means, including but not limited to using credit or debit card payments, using pre-payment account, using gift cards or vouchers, making a wire transfer using Internet banking, or using electronic payment services such as PayPal, etc. The method further comprises providing the user, the electronic file, or the rapid manufacturing or the rapid prototyping tool with a unique identification code necessary for reproducing the 3D object.

According to one embodiment, the inquiry is a request from said rapid manufacturing or prototyping tool, such as 3D printer. Such method further comprises providing said rapid manufacturing or prototyping tool with a unique identifier necessary for reproducing the 3D object. Said unique identifier is a device specific identifier, associated in a computer system as authorized to reproduce at least one 3D object, and at the request to print said at least one 3D object, delivering (e.g., sending or streaming) said 3D object to said rapid manufacturing or prototyping tool over a secured data loss proof channel.

According to one embodiment, the method comprises securely storing a list of unique 3D model specific identifying codes on said rapid manufacturing or prototyping tool such as 3D printer for checking the restrictions by said rapid manufacturing or prototyping tool itself without the need for continuous real time connection with the 3D restricted rights database. The method further comprises updating said list of unique 3D model specific identifying codes from said 3D restricted rights database when said rapid manufacturing or prototyping tool is connected with said 3D restricted rights database over the computer network. Such unique 3D model specific identification codes may be hashes, obfuscated 3D models, Copyright identifiers CID, License identifiers LID and Anti-Piracy Identifiers APID, or a combination of these, or other calculation methods.

According to one embodiment, the method comprises updating the 3D restricted rights database by a right holder. Such method comprises uploading a new 3D model, representing 3D object, into the restricted rights database, defining part or parts of the 3D object, the use of which is restricted, and providing the terms for reproducing said 3D object or part or parts of the 3D object.

According to the embodiments of the invention, the inquiry may be received from different sources of 3D models, including, but not limited to a third party 3D model shop, a 3D scanning device, a 3D computer-aided design software, a 3D model community, a 3D modelling database, etc.

According to one embodiment, the method comprises receiving said inquiry from a 3D scanning device (3D scanner) at the time of scanning a 3D object, and providing the electronic file generated by the 3D scanning device, or the 3D model with a 3D model specific identification code for determining whether reproducing of the 3D object is restricted or prohibited.

The invention is also a system for enforcing intellectual property rights in a rapid manufacturing and prototyping environment, the system comprising a source of 3D objects such as an online shop for 3D models, an online databank of 3D objects, 3D modelling service or other online services, or simply 3D scanning device. The system further comprises a restricted rights database, said restricted rights database accessible over an Internet or local computer network (including, but not limited to that the restricted rights database is stored in a cloud), an end user device, connected to the Internet and to a rapid manufacturing and prototyping device (such as 3D printer), which in turn is connected both to the end user device and to the Internet, and a restricted rights management application. The 3D restricted rights database comprises 3D intellectual property rights database and a database of 3D items, which mechanical reproduction is prohibited by law. The restricted rights management application comprising a 3D objects similarity check module, a Web Application Programming Interface for receiving inquiries from the source of 3D objects, a web based user interface (Web UI), 3D printers API for communicating with 3D printers checking every 3D object to be printed against objects in IPR database, Licensing Module for allowing the user to obtain a license necessary for mechanically reproducing the 3D object, a Royalty Payment Transaction Module allowing the user to pay any license fees necessary, and 3D Object streamer for streaming of 3D object data through Internet or LAN directly to the rapid manufacturing or prototyping tool over a secure channel.

### Brief description of drawings

Fig 1 is a system according to one embodiment of the invention.

Fig 2 is a system according to another embodiment of the invention.

Fig 3 is a method according to one embodiment of the invention.

### Description of embodiments

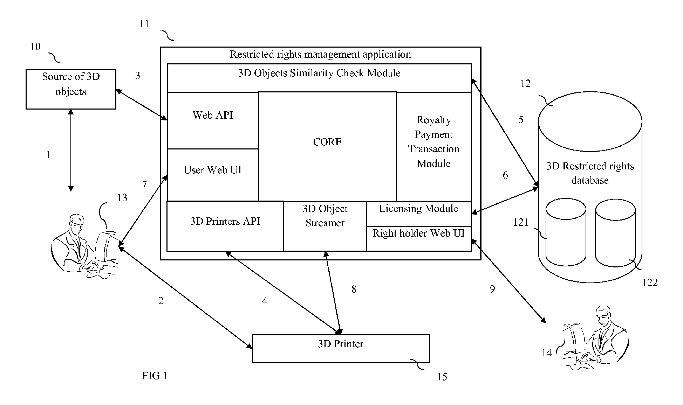

The system for enforcing 3D restricted rights (RR) in a rapid manufacturing and prototyping environment according to one embodiment of the invention is shown in Fig 1. The system comprises a source of 3D objects 10 such as an online shop for 3D models, an online databank of 3D objects, 3D modelling service or other online services, a 3D computer-aided design (CAD) software, or simply a 3D scanning device. The end user can access the source of 3D objects 10 over the Internet, or over LAN, using the end user device 13. The system further comprises restricted rights RR management application 11. The RR management application 11 comprises a 3D objects Similarity Check Module, a Web Application Interface (Web API) for receiving restricted rights related inquiries from the source of 3D objects 10, a web based user interface (Web UI), 3D printers API for communicating with 3D printers 15 checking every 3D model to be printed against objects in RR database 12, Licensing Module for providing the user with necessary license for reproducing the 3D object, a Royalty Payment Transaction Module allowing the user to pay any license fees required, a 3D Object streamer for streaming of 3D object data through Internet or LAN directly to the 3D printer 15, and a core for operating the RR management application. The RR management application also has a right holder Web user interface so that the right holder can upload new 3D objects into RR database and modify rights associated with such 3D objects, using right holder device 14.

The system as shown in Fig 1 may be used as follows. The user is requesting a 3D object from a source of 3D objects (step 1) to be reproduced using the 3D printer (step 2). The source of 3D objects sends an inquiry to the RR management application through the WebAPI (step 3). The 3D printer has a software code or a hardware installed that requires, through a 3D printers API, for every 3D model to be printed a confirmation from the RR management application that reproducing of the 3D model is not restricted (step 4). The restricted rights management application checks if restrictions exist in RR database (step 5). If so, the Licensing Module is initiated (step 6) and the end user is offered a license. The Licensing Module may be adapted to provide any type of license, including single, multiple or other types of licenses for reproducing authorized restricted rights 3D models. The user can communicate with the RR management application through the user Web UI (step 7). If the license terms include royalty payments, the Royalty Payment Transaction Module is initiated and the user is provided with opportunity to pay for the license. Then, the 3D printer is provided with a confirmation that the 3D model can be printed, and the 3D model is delivered (sent, streamed) to the 3D printer through 3D Object streamer (step 8).

The system allows the right holder to update the RR database to upload new 3D object together with their restriction terms (step 9).

The WebAPI can support authentication, secured 3D model transfer, or other restricted rights requests. The Web API can be implemented, e.g., using Secured SOAP, REST, HTTP with, e.g., OAuth (open source) authentication, or other suitable means.

The 3D streamer can be implemented, e.g., using RTMPS (real time messaging protocol over a secure SSL connection using HTTPS), FDT (fast data transfer), 3TP (an application layer protocol for streaming 3D graphics), a proprietary protocol developed for restricted rights management application, or other suitable means.

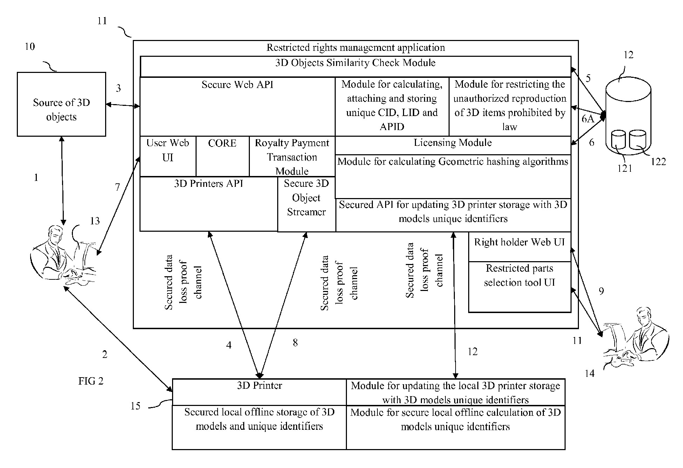

Another embodiment of invention, a more elaborated system for enforcing 3D restricted rights in a rapid manufacturing and prototyping environment is shown in Fig 2. The same reference numbers are used as in Fig 1. The skilled person appreciates that the teaching of the embodiments of Fig 1 and Fig 2 can be freely combined with each other. The system comprises a source of 3D objects 10 as in Fig. 1. The end user can access the source of 3D objects 10 over the Internet, or over LAN, using the end user device 13. The restricted rights RR management application 11 comprises a 3D objects Similarity Check Module, a Web Application Interface (Web API; for checking the licenses / copyright / anti-piracy or other restricted rights permissions status and authorizing of 3D print requests from 3D online services and communities) for receiving IPR related inquiries from the source of 3D objects 10, a web based user interface (User Web UI), 3D printers API ( for verifying, transferring and granting licences to parts of or to complete 3D models) for communicating with 3D printers 15, checking every 3D model to be printed against objects in RR database 12, Licensing Module for providing the user with necessary license for reproducing the 3D object, a Royalty Payment Transaction Module allowing the user to pay any license fees required, a 3D Object streamer for streaming of 3D object data through Internet or LAN directly to the 3D printer 15, a module for calculating, attaching and storing unique identification code (such as copyright identifier CID, license identifier LID, anti-piracy identifier APID, etc), a secured API for updating 3D printer storage with 3D models unique identifiers, Module for calculating geometric hashing algorithms, Module for restricting the unauthorized reproduction of 3D items prohibited by law, and a core for operating the RR management application. The RR management application also has a right holder Web user interface so that the right holder can upload new 3D objects into RR database and modify rights and permissions associated with such 3D objects, using right holder device 14. The RR management application has a restricted parts selection tool UI allowing the right holder to indicate the parts of the 3D object which use is restricted or prohibited.

3D Printer as shown in Fig 2 comprises a secured local offline storage of 3D models and unique identifiers, a module for updating the local 3D printer storage with 3D models unique identifiers and a Module for secure local offline calculation of 3D models unique identifiers.

The system as shown in Fig 2 is operated similarly to system on Fig 1. The user is requesting a 3D object from a source of 3D objects (step 1) to be reproduced using 3D printer (step 2). The source of 3D objects sends an inquiry to the RR management application through the Secure WebAPI (step 3). The 3D printer has a software code or a hardware installed that requires for every 3D model to be printed a confirmation , through a 3D printers API from the RR management application that reproducing of the 3D model is not restricted (step 4). The restricted rights management application checks if restrictions exist in RR database (step 5). The Licensing Module is initiated (step 6) and the end user is offered a license, or the Module for restricting the unauthorized reproduction of 3D items prohibited by law is initiated (step 6A), if the 3D object is prohibited from reproduction. The Licensing Module may be adapted to provide any type of license, including single, multiple or other types of licenses for reproducing authorized restricted rights 3D models. The user can communicate with the RR management application through the user Web UI (step 7). If the license terms include royalty payments, the Royalty Payment Transaction Module is initiated and the user is provided with opportunity to pay for the license. Then, the 3D printer is provided with a confirmation that the 3D model can be printed, and the 3D model is delivered (sent, streamed) to the 3D printer through 3D Object streamer (step 8).

The 3D printer is adapted for offline storing of 3D models and their unique identifiers in a storage. The storage is updated while the 3D printer is connected to the network (step 12) and the unique identifiers are calculated in the 3D printer or updated from the network.

The system allows the right holder to update the RR database to upload new 3D objects together with their restriction terms (step 9), including determining which parts of the 3D object are restricted from reproduction, using Restricted parts selection tool UI (step 11).

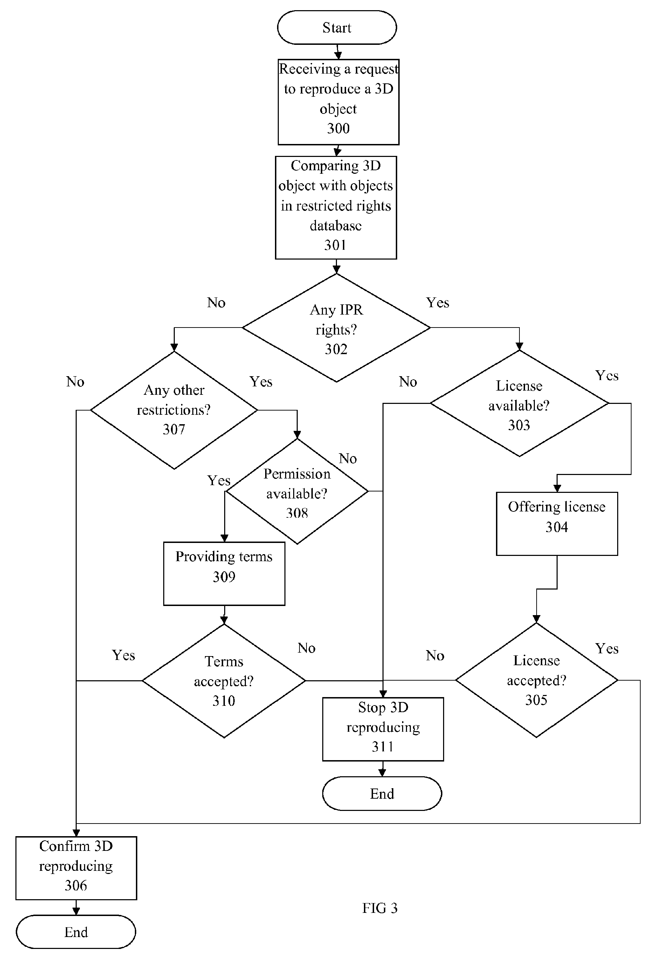

A method of enforcing 3D restricted rights in a rapid manufacturing and prototyping environment according to one embodiment of the invention is depicted in Fig 3. The method comprises receiving by a computer system a request to copy (i.e., to reproduce, to make a mechanical 3D copy) of a 3D object (step 300) or of at least one part of said 3D object; determining by the computer system whether any restrictions exists for mechanical reproduction of said 3D object by comparing said 3D object with objects in a restricted rights database (step 301). First it is checked if any IPR right exists (step 302). If yes, it is checked if a license is available (step 303). If not, the 3D reproducing is stopped or blocked by the computer system. If yes, the user is offered a license to make a 3D reproduction of the 3D object (step 304). If the license is accepted (this may include paying for the license, if the license is not for free) (step 305), the 3D reproducing request is confirmed (step 306). This may include providing the reproducing device, the 3D object itself or the user with a unique ID enabling making one or more reproductions. If the license is not accepted, the 3D reproducing is stopped or blocked (step 311). Other affirmative actions can be taken by the system as described below.

If no IPR's exist, other restrictions are checked (step 307), such as restrictions to make copies of prohibited items such as weapons and firearms and their parts, or restrictions based on other rights such as personality rights, rights to personal image (likeness), or restrictions based on a contract (e.g., access agreement terms to use commercial 3D image databanks). If yes, it is checked if permission is available (step 308). If not, the 3D reproducing is stopped or blocked. If yes, the user is provided with the terms of such permission (step 309). If the terms are accepted by the user (this may also include paying fees for making 3D reproductions) (step 310), the 3D reproducing request is confirmed (step 306). If the terms are not accepted, the 3D reproducing is stopped or blocked (step 311).

The determining if any restrictions exist in a restricted rights database can be accomplished by comparing said 3D object, the electronic file of said 3D object, or an identification code stored directly in said 3D object or attached to the electronic file of said 3D object, with corresponding records in the 3D restricted rights database.

The computer system may take an appropriate affirmative action based on the restrictions. Such affirmative action may be one or more actions, including sending a notice to the user that the 3D object is protected by intellectual property rights, sending a warning to the user that reproduction of the 3D object is illegal, prohibited or restricted; stopping the tools from reproducing the 3D object; stopping the computer system from copying, alternating, removing, moving or streaming of the 3D object and its electronic file, providing the reproduced 3D object with labelling that it is an unauthorized copy, is for private use only, or other information of similar nature; altering the reproduced 3D object to make it safe or unusable for prohibited purposes, or offering the user a license for fee or for free.

Offering the user a license to reproduce the 3D object, receiving the user's acceptance of the offer and delivering (sending, streaming) said 3D object to a rapid manufacturing or prototyping tool over a secure and data loss proof channel. Such method may comprise receiving a payment from the user by any known means, including but not limited to using credit or debit card payments, using pre-payment account, using gift cards or vouchers, making a wire transfer using Internet banking, or using electronic payment services such as PayPal, etc.

The 3D reproduction process is preferably controlled by providing the user, the electronic file, or the rapid manufacturing or the rapid prototyping tool with a unique identification code necessary for reproducing the 3D object.

Several use cases of the systems and methods according to present invention are now discussed.

Use case 1: the right holder

The right holder of any restricted rights, including intellectual property rights, such as copyright, design right, 3D trade mark right, invention patent or utility models right, or personality rights, or other rights, opens an account with the service. The right holder agrees to its terms. There accounts can be for fee or for free. The right holder can be asked to fill in payment options and details. There can be several security and authentication alternatives available to make sure that the right holder has the right to register the designs as well as for future authentication of returning right holders.

Right holder can open her own modifiable store front in the service. This store front user interface can be branded to reflect the right holders wishes, brands and requirements and will be displayed to visiting customers of the service.

Right holder uploads a 3D model into the service and indicates the parts of the 3D object or the whole 3D object that right holder wants to protect by limiting its 3D copying. Any licences can be revoked or canceled any time, due to misuse or other reasons.

Right holder selects the desired protection or restrictions level. Right holder may choose to allow free and unlimited distribution of the 3D model (but, e.g., requiring that attribution rights are respected) or to charge a license fee for parts or the whole 3D object or their combinations.

The service calculates and categorizes the 3D objects based on their shape, color, pattern and selected other properties that the right holder wants to protect or their combinations. The identification data is stored into the restricted rights database.

The service algorithms are used to filter out basic forms, shapes, patterns, etc., and other objects that can not be protected, such as a simple square or round object. These can be either preloaded into the service by the service administrator or can be updated, e.g., by the right holders.

Service algorithms can be used to limit submission of unauthorized claims for already uploaded and protected 3D objects by other service users so that basic forms and objects of other right holders can not be claimed by unauthorized service users. In case of conflict the service can present options to the service users or right holder to resolve the conflict and alter the option selections until the submission is approved. A dispute resolution option may be provided. Once there is no conflict the 3D object is approved for upload and storage in the restricted rights database.

There can be a community feedback tool for the right holders and other service users to vote, rate and give feedback on the uploaded 3D objects. This feedback can be about the quality of the design, model and their printability or objections to the originality of the design or model that has been uploaded and protected. There can be an elimination process based on enough negative feedback of the protection or restrictions of the whole model or parts of it.

In the case of crowsourced community projects or other common creation designs the 3D models and designs can be attributed to several right holders and royalties and revenues can be attributed to more than one right holder.

The service user interface tool allows sharing the submissions during submission process with other right holders and service users for input, either live during submission process or through accessing the submission 3D model from their own user accounts later, modify the submission and save it.

The submitting right holder, e.g., a 3D model store owner in the service can change roles and give the submission role to another right holder or service user at any stage. The service saves and keeps track of these changes. There can be multiple right holders and other users registered as the authorized submission/administration role.

Use case 2: 3D models online shopping site customer

3D online shopping site customer or user is a person using the service from a third party or service's own shopping web service, community or application for 3D objects.

The visitor of such websites and services can use features of the service as a registered or unregistered user. if the user registers as a user of a third party service, the process depends on their rules and terms.

If these third party shopping sites use the system according to present invention, their services are connected to it through the network using the APIs.

If the user accesses the service from a computer (or other device) the service can collect identifying information about the device such location and IDs, including the 3D printer ID if one is detected. If there is no 3D printer ID detected, the 3D printer is provided with the ID by the system. If the ID of a 3D printer is not automatically detected and sent to the service, the service can provide a unique ID to the 3D printer for IPR purposes and store it. if the user computer is connected to a 3D printer or the 3D printer is connected directly to the network the 3D printer ID is registered into the service databases for future verification purposes through the network. This ID can be used as an additional method for verifying authorization to reproduce objects through that 3D printer.

3D Object reproducing licences can be tied with printer IDs to have the option to restrict further the printability on certain printers.

When a user is visiting a third party online service or community for printable objects, user is presented with a range of objects to review and purchase. The service may learn from these visits, habits and purchases and may suggest options based on these as well. The 3D printer ID can be used to help improve these results.

The user selects one or more objects for 3D reproduction. The user is presented with the payment options and completes payment. This can happen inside the service or in an external service or through online payment brokers. In the case of user visiting a 3D print shop and requesting to print the object there or sending the object to such a service, these steps may be performed by the administrator of said service.

Reproduction rights can be verified in different stages:

Third party service can allow the service to check their uploaded 3D objects for restrictions during their upload by users of the third party service and/or the restrictions are checked every time the 3D object is reproduced. The 3D objects are verified at least each time they are reproduced by the 3D printer.

Open Source 3D printers can be restricted and controlled and verified by attributing ID to them or checking the 3D printer ID against stored IDs in service database, as an effort to control also open source printers when they are connected to the networks such as the internet and are trying to reproduce any 3D object.

If the user is allowed to buy and download a full 3D model via the network, user can download the full 3D model to the local computer or device.

Before reproducing, the 3D printer and/or the computer sends the 3D model to the service where it is compared to the 3D models stored in a restricted rights database and restrictions.

The service can also divide the 3D models into smaller portions using different methods and send these portions to the service where they are checked against the database. In this case a full 3D model does not have to be sent to the service for comparison.

If there is no match found that restricts reproducing in any way a permission to print it locally is returned from the service and presented to the user. Alternatively, in such case no information is presented to the user and reproducing can proceed automatically.

If there is a match found in the service and database the user can be offered a licence to reproduce it. These licences, their cost, duration, validity, etc., can vary depending on the right holders or service provider terms.

If the third party or the service uses 3D model streaming over a secure data loss proof channel, the 3D model is checked in the service before it is streamed to the user for reproduction so that unauthorized objects are not streamed. Alternatively a routing comparison method is used where the streamed data are compared live during streaming in the service against the models in the database by routing the stream via the service before or during the reproduction. When restricted rights are found, the streaming can be stopped or blocked.

The service can check during the streaming that the process is successful and not modified in any way in breach of the terms of the license.

Use case 3: user own offline creation

In this case, the user is not connected to the internet, to the service and the restricted rights database. User creates her own 3D model using a computer or other device, software, or through modifying an existing model, or by a scanning the 3D object with a 3D scanner.

The 3D printer can be equipped with software and/or hardware (storage) that locally stores and updates a library/list/collection of objects that are restricted for any reason from reproducting (3D reproducing). These locally stored objects can be but are not necessarily full models. They can be calculations of their originals for restriction verification purposes.

If the 3D printer is offline from the network, the printer will only allow reproducing objects that are not recognized as restricted in the local storage. If there is a match against the stored models it is not possible to print the object before reconnecting to a network and updating the storage and possibly purchasing a licence for it if there is still a match and availability online.

A maximum temporal or numerical limit until which the 3D printer can be allowed to be offline and not updated may be set. If this time or printed objects number limit is exceeded the printer will not print more objects before updating it again. This is to prevent or minimize making unauthorized 3D copies during extended offline use. The time limit or number of printed objects can vary depending on manufacturer, service or other reasons but can not be changed or tampered with by unauthorized users (consumer, authority or business user).

Once the 3D printer has network access restored, the local storage is automatically updated.This process can not be modified by unauthorized users. These functions can be combined with the 3D printer ID to further improve accuracy of each printer protection updates. Service databases can keep track of each stored 3D printer and their attributes for IPR protection purposes and stores their update history, their offline/online status, etc. The service can produce statistics of global 3D reproducing through these printers. Such result can be used to find out shopping habits, offer recommendations and advertising possibilities. service can present prompts and reminders to the users when the 3D printer is due for updating as well as warnings about impending limitations due to missing updates.

Use case 4: user own online creation

In this case, the user is connected to the internet or other computer network and to the service and its databases. The user can create her own 3D model using a computer or other device, software or through modifying an existing model or by scanning the 3D object with a 3D scanner. The 3D printer can check both locally and/or through the network connection to the service if the object or any part of it can be reproduced for free, for a licence or cannot be reproduced at all, e.g., when the right holder has completely restricted the reproducing or the item is a dangerous item such as a weapon or parts of a weapon.

The 3D printer can be equipped with software and/or hardware (storage) that lcoally stores and updates a library of objects that are restricted for various reasons for reproducing. These locally stored objects can be but are not necessarily full models to prevent misuse. They can be only calcucations of their originals for copyright verification purposes.

If the object is not restricted, or can be reproduced for free or cannot be found in the database, the printer will print it without restrictions. There can be a message to be displayed to the user or not.

If the object is fully or partially licenced, the service will prompt the user to acquire a licence to print the object. This license is offered to the user for free or for a fee. The user can be shown different payment options and guided through the payment in easy steps.

User can accept or reject the licence offer. In the case of accepting the licence offer, the user will complete the purchase process. If the user rejects the licence offer, the reproducing is not possible for items that require the licence.

When the licence is granted (and paid if not free), the service will start delivering (sending or streaming) the 3D model to the users 3D printer and verifies that it is fully printed. In case of quality issues the user can reprint the object, e.g., when the printer runs out of reproducing material or has network problems. The user has a feedback channel to issue a quality claim in case of problems with the service.

Thelicences can be acquired for reproducing single or multiple items. There can be a time limit within which the object must be printed or all the licences be used. Licences can be also tied to a particular printer ID and restricted per printer ID in which case the object can only be printed in that particular printer. For other printers a new licence is required - this can depend on the licence selection the right holder chooses or can be part of the service by default.

3D model streaming to the 3D printer happens using either standard or proprietary protocols, formats and methods. Interrupted (for example network connection problems) can be avoided by buffering the model stream to the printer or the computer.

The service completely prohibits the print of parts of fully restricted items such as guns. These can be uploaded into the service by authorities, for example. There can be a message displayed to the user that certain items are not allowed to print with or without a licence or permission.

These functions can be combined to the 3D printer ID to further improve accuracy of each printer protection updates. The service databases keep track of each stored 3D printer and their attributes for IPR purposes and stores their update history, their offline/online status etc.

Use case 5: 3D scanner case

User has a 3D scanner or access to a 3D scanner or orders an object to be 3D scanned in a service. User selects a 3D object for scanning and scannes the object using the 3D scanner. The scanner is connected to the internet and attaches a tag or tags to the scanned 3D object file with or without a software on the computer or scanner. In offline use, this tagging can happen via locally installed software and/or hardware on the scanner and/or computer. User can attribute certain tags to the scanned objects such as shape, color or pattern desriptors or choose to have the service to do this automatically.

Certain tags can already identify the object as registered, or IPR protected, for example if scanning a known protected object, or categorize it based on its features, shapes, patterns for recognition then or later in the service database. These tags can include such as shape ("round", "square", etc), taxonomy ( "mouse", "bird", etc), color ("red", etc) or any other type of tags redeemed necessary or their combinations. These tags can be hashes or encrypted etc. and not visible to the user.

Certain tags that are for identifying IPR-s are not user modifiable and accessible, they are created automatically and tamper proof. Tag modification can be allowed for certain administrators.

Scanners with IDs can be identified when connected to the network or a computer/network and store the IDs for IPR protection and restriction enforcement purposes.

## Claims

1. A method of enforcing 3D restricted rights in a rapid manufacturing and prototyping environment, the method comprising the steps of:
receiving by a computer system an inquiry whether a mechanical reproduction of a 3D object or of at least one part of said 3D object is restricted, wherein said 3D object is presented as an electronic file accessible in a computer system;
determining by the computer system from a 3D restricted rights database whether any restrictions exist for the mechanical reproduction of said 3D object; and
sending a response by a computer to said inquiry, said response comprising information on said restrictions or information that no restrictions exist in 3D restricted rights database.

2. A method according to claim 1, wherein said restricted rights database comprises one or more databases selected from a group consisting of a database of 3D intellectual property rights, a database of 3D items, which mechanical reproduction is prohibited by law, and a database of personality rights.

3. A method according to claims 1 to 2, wherein said inquiry is a request from a user to reproduce a 3D object using rapid manufacturing or prototyping tools connected directly or over a computer network to said computer system, from an electronic file of the 3D object; and the method comprises the computer system determining if said 3D object or at least one of its parts is included in said 3D restricted rights database by comparing said 3D object, the electronic file of said 3D object, or an identification code stored directly in said 3D object or the electronic file of said 3D object with corresponding records of the 3D restricted rights database; the computer system retrieving the restriction information from said 3D restriction database; and
the computer system taking an affirmative action, such affirmative action being one or more actions selected from the group consisting of notice to the user that the 3D object is protected by intellectual property rights, a warning to the user that reproduction of the 3D object is prohibited; stopping the tools from reproducing the 3D object; stopping the computer system from copying, moving, alternating, removing or streaming of the 3D object and its electronic file; or offering the user a license for fee or for free.

4. A method according to claims 1 to 3, comprising receiving an acceptance to the offer from the user; and delivering said 3D object to a rapid manufacturing or prototyping tool over a secure data loss proof channel.

5. A method according to claim 4, comprising receiving a payment from the user and providing the user, the electronic file, or the rapid manufacturing or the rapid prototyping tool with a unique identification code necessary for reproducing the 3D object.

6. A method according to claim 1, wherein said inquiry is a request from said rapid manufacturing or prototyping tool, and the method comprises providing said rapid manufacturing or prototyping tool with a unique identifier necessary for reproducing the 3D object.

7. A method according to claim 6, wherein said unique identifier is a device specific identifier, associated in a computer system as authorized to reproduce at least one 3D object, and at the request to print said at least one 3D object, and further comprising sending or streaming said 3D object to said rapid manufacturing or prototyping tool over a secured channel.

8. A method according to claim 1, comprising securely storing a list of unique 3D model specific identifying codes on said rapid manufacturing or prototyping tool for checking the restrictions by said rapid manufacturing or prototyping tool itself without real time connection to the 3D restricted rights database.

9. A method according to claim 8, comprising updating said list from said 3D restricted rights database when said rapid manufacturing or prototyping tool is connected to said 3D restricted rights database over the computer network.

10. A method according to claims 8 to 9, the unique 3D model specific identification codes is one or more selected from the group consisting of hash, obfuscated 3D model, Copyright identifier CID, License identifier LID and Anti-Piracy Identifier APID.

11. A method according to claim 1, comprising updating the 3D restricted rights database by a right holder.

12. A method according to claim 11, comprising uploading a new 3D model of a 3D object into a restricted rights database, defining part or parts of the 3D models the use of which is restricted and providing the terms for reproducing said part or parts of the 3D model.

13. A method according to claim 1, comprising receiving said inquiry from a source of 3D models, said source selected from a group consisting of a third party 3D model shop, a 3D scanning device, a 3D computer aided design software, a 3D model community, and a 3D model database.

14. A method according to claim 13, comprising receiving said inquiry from a 3D scanning device, and providing the electronic file generated by the 3D scanning device, or the 3D model with a 3D model specific identification code.

15. A system for enforcing intellectual property rights in a rapid manufacturing and prototyping environment, the system comprising a source of 3D objects, a restricted rights database, said restricted rights database accessible over an Internet or local computer network, an end user device, connected to the Internet and to a rapid manufacturing and prototyping device, which is in turn connected both to the end user device and to the Internet, and a restricted rights management application, wherein the restricted rights database comprises 3D intellectual property rights database and a database of 3D items, which mechanical reproduction is prohibited by law and the restricted rights management application comprises a 3D objects similarity check module, a Web Application Programming Interface for receiving inquiries from the source of 3D objects, a web based user interface (Web UI), 3D printers API for communicating with 3D printers checking every 3D model to be printed against objects in IPR database, Licensing Module for allowing the user to obtain a license necessary for mechanically reproducing the 3D object, a Royalty Payment Transaction Module allowing the user to pay any license fees necessary, and 3D Object streamer for streaming of 3D object data through Internet or LAN directly to the rapid manufacturing or prototyping tool over a secure channel.
